# EUROPEAN PATENT APPLICATION

(11) **EP 1 138 464 A2**
(43) Date of publication of application: **04.10.2001**
(21) Application number: 01107097.6
(22) Date of filing: 22.03.2001
(51) Int. Cl.: B29C 51/42

(54) **Single-station thermoforming apparatus**

(30) Priority: 29.03.2000 IT MI000657
(71) Applicant: CANNON S.P.A., 20090 Trezzano Sul Naviglio (MI) (IT)
(72) Inventor: Fiorentini, Francesco, 20144 Milan (IT); Scarioni, Giuseppe, 27029 Vigevano (PV) (IT)
(74) Representative: Coloberti, Luigi

(57) **Abstract**

A single-station thermoforming apparatus for thermoforming sheets (17) of plastic material. The apparatus comprises a mould member (13) movably supported into a chest (12) connectable to a source of vacuum, a window frame (16) to support a plastic sheet to be processed, above the mould member (13) into a working area (11A, 11B) of the apparatus, and at least one heater (25, 26; 35A, 35B) to heat the sheet (17) of plastic material; the heater (25, 26; 35A, 35B) is movably supported between an operative position in which the heater (25, 26; 35A, 35B) extends along a lateral face of the plastic sheet (17), and a inoperative position by performing a composite rotational and translational movement to tilt the heater (25, 26; 35A, 35B) onto at least one side of the working area (11A, 11B) of the thermoforming apparatus.

## Description

### FIELD OF THE INVENTION

This invention refers to the vacuum thermoforming apparatus normally used for shaping plastic sheet material, and more precisely concerns improvements to the supporting system to perform a tilting movement for the heaters, capable of achieving an extremely compact apparatus having limited overall dimensions and encumbrance.

### STATE OF THE ART

A single-station thermoforming apparatus normally comprises a peripheral frame defining a work area in which at least one movable mould member and supporting as well as blocking means for supporting and blocking a sheet of plastic material to be processed, usually operate; the apparatus also comprises one or more heaters preset to heat a plastic sheet to a pre-established softening temperature; suitable control means are provided to move the heaters horizontally from an advanced position, in which the heaters are positioned above and/or beneath the plastic sheet, to a retracted position outside the working area of the apparatus in which they allow the mould to be raised for the thermoforming of the heated plastic sheet. A thermoforming apparatus of this kind is described for example in DE-A-195 36 867 and EP-A-0 813 950.

In thermoforming apparatuses of kind referred to, the heaters are in the form of heating panels which are supported and made to move horizontally from a forward position, inside a working area of the apparatus, to a rearward position in a non-operative area in which the heating panels or each heating panel is disposed to one side of the apparatus outside the working area, so as not to hamper the rising and/or lowering of the mould pieces and other moving parts.

It is obvious therefore that in a thermoforming apparatus of the known type, the lateral disposition of the non-operative area for the heating panels, adjacent to the working area, calls for an extremely voluminous and cumbersome structure of the entire thermoforming apparatus, with consequent higher costs and consumption greater space.

In addition, due to the considerable dimensions of the entire thermoforming apparatus, the latter must necessarily be moved to the work place in partially disassembled conditions and subsequently reassembled, with consequent time consumption and additional costs.

US-A-5.778.145 and JP-A-59202816 describe the use of tiltable heating panels or transversally movable panels which can be moved between an operative position and a non-operative position on both sides of a heater suitable for use with a continuous thermoforming plant, in which the sheets of plastic material are moved between a heating area and a thermoforming area suitably spaced apart along a processing line.

Even though both documents enable better use of the heating space inside the oven, by dividing the heaters into separate panels, and moving the separate panels on both sides, nevertheless due to the simple pivoting movement in US-A-5.778.145 and the positioning of the supporting levers in JP-A-59202816, the proposed solutions are not appropriate for their use in a single-station thermoforming apparatus due to the presence of the mould member and/or moving parts in the same heating and thermoforming area.

Consequently, there is a hitherto unfulfilled need for a single-station thermoforming apparatus of the aforementioned kind, having limited dimensions and being easy to move in a pre-assembled condition, in order to reduce space and costs.

### SCOPES OF THE INVENTION

Therefore, the general scope of this invention is to provide a thermoforming apparatus of the above defined type, which is structurally simple and of such limited overall dimensions as to occupy a smaller space plane-wise, and also enable a substantial reduction in cost.

A further scope of the invention is to provide a thermoforming apparatus of limited overall dimensions, as defined above, which can be assembled entirely in the factory and transported already assembled and operating to the place of work.

### BRIEF DESCRIPTION OF THE INVENTION

All this is achieved by means of a single-station thermoforming apparatus for thermoforming plastic sheets, according to claim 1.

More precisely, the above-mentioned scopes are achievable, in a single-station thermoforming apparatus, by providing suitable control means to control the heaters, so as to enable them to perform a composite movement of rotation and translation, with respect to a thermoforming mould member in a working area, along an arched path between a central or forward position, in which the heater or each heater is disposed spaced apart on one lateral face of a plastic sheet, and a rearward position in which the heater or each heater is tilted and disposed on one side of the working area; for example the heater can be tilted and oriented on a substantially vertical or suitably inclined plane compared to a reference plane, so as not to interfere with the mould member and/or with other moving parts of the apparatus, during operation.

In particular, according to the invention, a single-station thermoforming apparatus has been provided for shaping plastic sheets, comprising:
a peripheral structural frame defining a working area;
supporting and blocking means for supporting and blocking a plastic sheet to be thermoformed;
at least one mould member movable between a lowered position and a raised position to shape the plastic sheet;
heating means to soften the plastic sheet, said heating means comprising at least one heating panel movable between a forward position in said working area, spaced apart on one lateral face of the plastic sheet, and a rearward position with respect to the mould member; and
control means for guiding and moving the heating means to and from said forward and rearward positions, by conjointly performing a transversal and rotational movement to tilt said heating means onto one side of said working area, in said rearward position spaced apart from the mould member and moving parts of the thermoforming apparatus.

### BRIEF DESCRIPTION OF THE DRAWINGS

These and other features of a single-station thermoforming apparatus according to the invention, as well as some particular embodiments of the control means for moving the heaters, will be described in greater detail herein with reference to the accompanying drawings, in which:
Fig. 1 shows a schematic view of a thermoforming apparatus, in order to illustrate the present invention;
Fig. 2 shows a first embodiment of the control means for controlling the heaters of the apparatus of figure 1;
Fig. 3 shows a schematic view in order to illustrate two different embodiments of the control means for controlling the upper heater, respectively the lower heater;
Fig. 4 schematically shows a further embodiment.

### DETAILED DESCRIPTION OF THE INVENTION

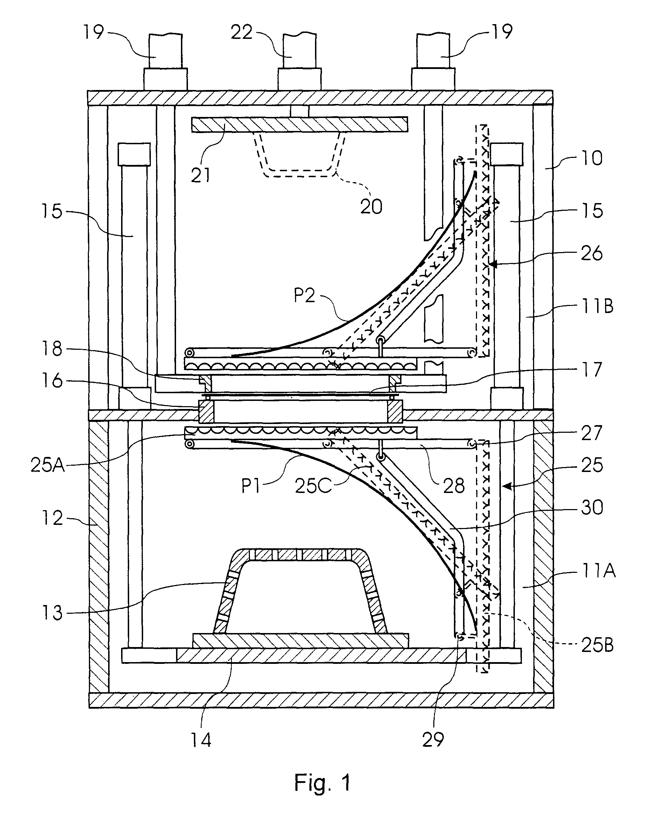

As shown in figure 1, a single-station thermoforming apparatus comprises a structural frame 10 defining a lower working area 11A, and an upper working area 11B, disposed above the former.

The lower working area 11A in general comprises a chest 12 for containing a mould member 13, connectable, in a known way, to a vacuum and/or pressurised air source. The mould member 13 is supported by a platen 14 which can be moved along a vertical axis of the apparatus, for example by means of hydraulic cylinders 15, from a lowered position shown in figure 1, to a raised position through the frame of a rectangular window 16 defining a resting surface for supporting a sheet 17 of plastic material to be processed or thermoformed. The plastic sheet 17 is pressed and held against the edges of the supporting frame 16 by means of a pressure frame 18 which can be raised and lowered by means of a pair of pneumatic cylinders 19 in the upper working area 11B of the thermoforming apparatus.

Depending upon the shape and characteristics of the pieces to be thermoformed, the working area 11B in addition to the pressure frame 18, can be provided with a shaping member 20 supported by a movable frame 21 to enable it to be raised and lowered, by means of a hydraulic cylinder 22, towards and against the lower mould member 13, in the raised condition of the latter, to shape the plastic sheet 17 after it has been suitably heated and brought to a pre-established softening temperature.

The thermoforming apparatus also comprises heating means 25 and/or 26 to heat the plastic sheet 17 to a pre-established softening temperature, as well as control means described further on, to guide and move said heating means 25, 26 between a non-operative or rest position, in which the heating means 25, 26 are disposed laterally to the working areas in a position suitable to not interfere with the movements of the pressure frame 18, the lower mould member 13 and/or the upper shaping member 20, and a central operative position, in which the heating means 25, 26 are disposed parallel to the frame of the window 16 in a position spaced apart from the plastic sheet 17, above and/or beneath the lateral faces of the sheet 17, as shown.

As previously mentioned, in the known single-station thermoforming apparatuses the heating means, for example in the form of radiating panels, are movable along horizontal guides which extend laterally between a central heating position, inside the working area defined by the chest 12 and/or in the upper portion, and a rest position on one or both sides of the apparatus, outside the aforesaid working area. Consequently, the overall dimensions of a conventional thermoforming apparatus are considerably extensive due to the need to have, at the sides of the working area, sufficient space to accommodate the heating means in their non-operative condition, when the thermoforming mould member 13 and/or the shaping device 20 are brought close to or pressed against the sheet 17 of plastic material to be thermoformed.

Unlike the previously known thermoforming apparatuses, according to this invention the heating means can be moved and tilted, onto one side while keeping the same heating means inside the working area. More precisely, the heating means comprise one or more heating panels, supported and guided in order to move between a central operative position and a lateral non-operative position, by means of a rotational and translation composite movement capable of making the heating panel follow an arched path, for example defined by an envelope line of the various positions assumed by the heating panel during its composite movement, whose convexity faces towards the frame 16 of the window supporting the plastic sheet 17 to be heated. In addition, this type of convexity offers the maximum available space for the mould member or the upper shaping device.

In general terms, the composite tiltable and transversal movement of the panel, or of each panel, of the heating device, is composed of one or more rotational movements, and one or more translational movements, which can be conjointly carried out or in successive movements, according to the solution chosen, the requirements and the features of the thermoforming apparatus.

The general principles of the invention, relating to the composite movement of the heating device, are now described in detail with reference to figure 1 of the accompanying drawings. In this figure use is made of a heating device 25 in the lower working area 11A, and a heating device 26 in the upper working area 11B; however, one of the two heating devices, may also be omitted.

In the case shown, each heating device 25 or 26 is in the form of a heating panel which extends over the maximum width of the window frame 16. In fact, although a frame of a window 16 having constant dimensions has been represented, in practice the frame of the window 16 may also be made with variable dimensions in a per se known way, for example as described in AT-A-223.371.

According to this invention, with reference to the heating panel 25, the latter can move between a central operative position, indicated by reference 25A, in which the heating panel is disposed beneath and parallel to the frame 16 which supports the sheet 17, and a lateral non-operative position, also referred to as a rest position and indicated by reference 25B, in which the heating panel 25 is tilted downwards and disposed on one side of the lower working area 11A, remaining at a suitable space from the mould member 13 so as not to interfere with the upward and downward movement of the mould same.

The movement of the heating panel 25 between the positions 25A and 25B is achieved by performing a composite rotational and translational movement passing through a plurality of intermediate positions, one of which is indicated by reference 25C, along an arched path P1 defined for example by the envelope line of the various positions assumed by panel 25, whose convex side faces towards the frame 16 for supporting the sheet 17 to be heated.

More precisely, in the case shown the lower panel 25 is supported, on each of its sides, by a first roller 27 running along a first horizontal guide 28 which extends parallel to and beneath the frame 16 of the window; the panel 25 is also supported on each side by a second roller 29 running along a second shaped guide 30 directed upwards and towards the working area 11A, thereby maintaining the panel 25 in a condition of minimum obstruction without protruding from the chest 12. The above also applies for the upper heating panel 26 where reference P2 indicates the relative envelope line.

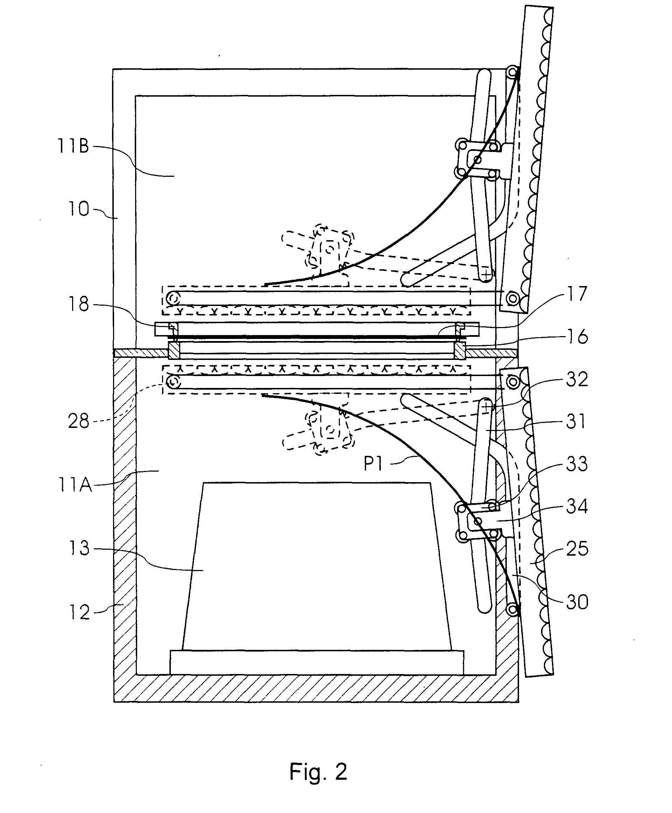

With reference to figure 2 a detailed description is now given of a first embodiment of the control means for guiding and controlling the movement of the two heating panels 25 and 26.

Also in the case of figure 2, the means for controlling the movement of the two heating panels 25 e 26 in the lower working area 11A, respectively in the upper working area 11B, are made identical.

Therefore a detailed description will be given hereunder exclusively of the control means for the lower heating panel 25, referring to the latter with regard to the control means for the upper heating panel 26.

Figure 2 shows with continuous lines the lower heating panel 25 in the non-operative position, on one side of the mould member 13, while broken lines show the same panel in the central operative position in which it is in an aligned position beneath the plastic sheet 17.

As shown, on each side of the panel 25, the control means comprise a connecting rod 31, shaped at an angle, pivoted in 32 to the frame 10 of the apparatus. The connecting rod 31, in the rest position of the panel 25, is disposed substantially oriented vertically downward. Running along the connecting rod 31 is a supporting carriage 33 for supporting a geared motor 34 which is pivoted to the carriage 33 and operatively connected to the panel 25 to control the movement of the latter between the two non-operative and operative positions shown, following rotation of the connecting rod 31 caused by the reaction of the geared motor 34, as shown.

As explained previously, the heating panel 25 is supported and guided to move along the arched path defined by the envelope line of the various positions assumed by the same panel during its movement. In this connection in figure 2 the same numerical references as figure 1 have been used to indicate similar or equivalent parts.

What has been described for the lower heating panel 25, applies identically for the upper heating panel 26, with the sole difference that in this second case the various control means are inversely disposed, in addition to the fact the envelope line P2 of movement of the heating panel 26 now has its convexity facing downwards, that is again towards the frame of the window 26 which supports the sheet 17 of plastic material to be thermoformed.

The operation of the control device for raising and lowering the heating panel 25, including the connecting rod 31, the geared motor 34, the carriage 33 and the guides 28 and 30 is in brief as follows: the geared motor 34 is secured posteriorly in an intermediate position to the panel 25, and is connected by a pivot to the carriage 33 running along the connecting rod 31. Consequently, starting from the rest condition 25B (figure 1) of the panel 25, the geared motor 34 generates a torque which tends to make the panel rotate in an anticlockwise direction and to cause the roller 27 to run forward along the guide 28 and which, due to the reaction forces impels the connecting rod 31 to rotate in a clockwise direction or in an opposite direction to the panel 25, that is to say upwards; in this way the panel 25 performs a roto-translational movement along the arched path P1, maintaining the heating side facing towards the plastic sheet 17. Obviously, the connecting rods 31, on both sides of the panel, are interconnected to permit a simultaneously rotation.

The reverse roto-translational movement of the panel 25, from the operative condition to the non-operative position of figure 2, takes place in the opposite way to that described above.

As mentioned previously, in the case of figures 1 and 2, each heating device comprises a single heating panel which extends along the entire width of the window frame 16 supporting the plastic sheet 17 to be thermoformed.

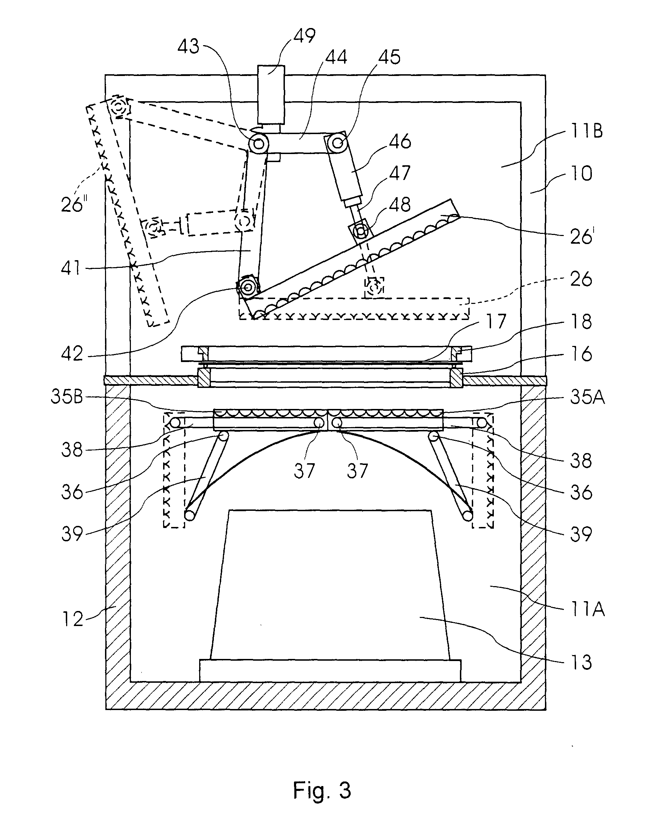

As shown in the lower portion of figure 3, each heating device can comprises two heating panels 35A, 35B which extend along half the width of the frame 16 and which are each disposed on a respective side of the mould member 13 in the lower working area 11A, or disposed side by side parallel to the window 16, as shown.

Each heating panel 35A and 35B is likewise supported and made to move by means of a composite rotational and translational movement, in order to make the panel move along an arched path, as shown, whose convexity likewise faces towards the sheet 17 of plastic material to be heated.

In the case of figure 3, both the heating panel 35A and the heating panel 35B are supported by means of pairs of rollers 36 and 37 running along horizontal guides 38, respectively along sloping guides 39 directed upwards and inside towards the central axis of the working area 11A.

The movement of each panel 35A, 35B can be controlled in any suitable way, by providing them both with control cylinder or any other type of actuator.

Other solutions are possible as regards the shape and positioning of the means for controlling and guiding the rotational and translational movement of each heating device 25 and 26. For example, as shown for the upper part of figure 3, the control means can comprise an articulated quadrilateral system having one extensible side for the reasons explained further on.

In particular, the articulated quadrilateral system comprises the same heating panel 26, a first connecting rod 41 pivoted in 42 to one end of the panel 26, and pivoted in 43 to the frame 10 of the thermoforming apparatus. The articulated quadrilateral system also comprises a second connecting rod 44 freely pivoted in 43, and in 45 to a third extensible connecting rod substantially comprises a hydraulic or pneumatic cylinder 46 whose rod 47 is in turn pivoted in 48 to the heating panel 26.

The pin 43 for rotation of the first connecting rod 41, is in turn mechanically connected to the shaft of a geared motor 49 to control the lateral rotation of the entire system, as shown by the broken line in the upper portion of figure 3.

The operation of the control device is briefly as follows: initially the heating panel 26 and the supporting articulated quadrilateral system are in the lateral inoperative position with the heating panel 26'' which is disposed inclined as shown in the left part of figure 3. In this condition the pressure frame 18 can be lowered against the sheet 17 resting on the supporting frame 16.

After having lowered the pressure frame 18, by operating the geared motor 49 it is possible to rotate the entire quadrilateral system with the heating panel to the central position shown by the continuous line in which the panel 26' is slanting upwards.

At this point the cylinder 46 is operated to lower the heating panel 26 into the position parallel to the sheet 17 which can thus be heated and brought to the desired softening temperature for the subsequent thermoforming operation against the mould member 13. Having completed the heating step of the sheet 17, the heating panel can be returned to the initial rest position, by carrying out the previously described movements in reverse.

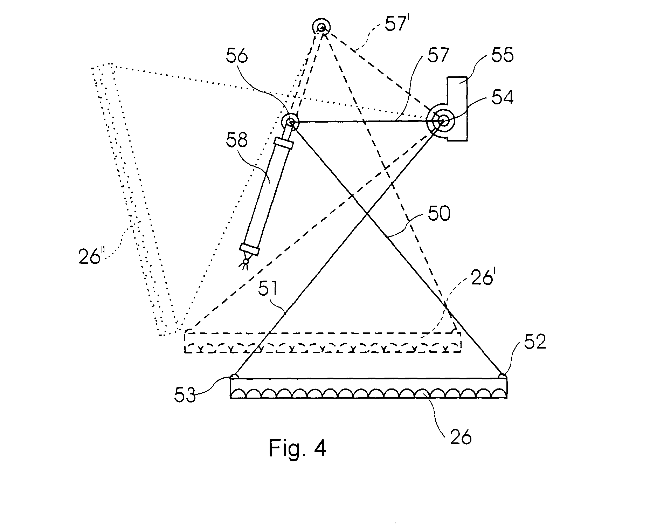

Figure 4 of the accompanying drawings schematically shows a fourth embodiment for the upper heating panel 26. In this case use is made of an articulated quadrilateral system comprising crossed connecting rods, capable of performing a double rotational and translational movement as explained hereunder.

The articulated quadrilateral of figure 4, substantially comprises on each side of the panel 26, two crossed connecting rods 50 and 51, pivoted in 52 respectively in 53 at the ends of the heating panel 26.

The connecting rod 51 in turn is operatively connected in 54 to the shaft of a geared motor 55 which controls the rotation of the entire system, as shown.

The connecting rod 50 is in turn pivoted in 56 to a third connecting rod 57 freely and coaxially pivoted to the shaft 54 of the geared motor 55.

A control cylinder 58 has its rod articulated to the hinge 56 to rotate the connecting rod 57 towards the position indicated by the broken line 57' in figure 4, drawing the entire articulated system upwards.

The operation of the articulated system of figure 4 is briefly as follows: initially the system is in the condition indicated by the continuous line, in which the heating panel 26 is in a horizontal position, parallel to the sheet of material to be heated.

Starting from this condition, by means of the cylinder 58 the articulated system is made to perform a first roto-translational movement bringing the connecting rod 57 to the position 57', and the panel 26 to the position 26', as shown by the broken line in figure 4.

Subsequently, by means of the geared motor 55 the articulated system is made to perform a second roto-translational movement to bring the heating panel from the position 26' to the lateral position 26" also shown in figure 4; other embodiments are obviously possible.

From what has been described, it is clear that a thermoforming apparatus with tiltable heaters is provided, in which the means for controlling and guiding the rotational and translational movements of the heating device or of each heating device are achieved and disposed inside the working area of the apparatus, in such a way as to substantially reduce its overall dimensions without affecting the functional capacity of the same apparatus, for example the available space for the mould, and consequently the working height, or the use of the auxiliary shaping member. Several solutions have also been illustrated for the control means for controlling the movement of the heating devices, which are not exhaustive of all the possible solutions. In each case a condition of minimum overall dimensions is achieved in that each heating device always remains confined within the working area of the apparatus.

By means of this invention, it is also possible to construct and assemble the apparatus totally in the factory and transport it, in an already assembled condition, to the place of work, thereby obtaining an extremely simplified unitary structured apparatus, with comparatively reduced costs compared to the conventional thermoforming apparatuses.

It is understood however that what has been described and shown with reference to the accompanying drawings, is given purely by way of example in order to illustrate several possible embodiments of the invention; therefore modification or variations may be made to the entire thermoforming apparatus and in particular to the control means for controlling the heating devices, without departing from the scope of the claims.

## Claims

1. A single-station thermoforming apparatus for shaping a plastic sheet (17) having the peripheral edges pressed against supporting surface of a window frame (16), the apparatus comprising:
- structural frame (10) defining a working area (11A, 11B) for at least one mould member (13);
- heating means (25, 26; 35A, 35B) for heating the plastic sheet (17);and
- control means (34, 49, 55) for moving the heating means (25, 26; 35A, 35B) between a central operative position, in which the heating means (25, 26; 35A, 35B) are disposed parallel to and on a lateral face of the plastic sheet (17), and a non-operative position in which the heating means (25, 26; 35A, 35B) are disposed on a side of the structural frame (10), **characterised in that**:
- the control means comprises guide means (28, 30; 38, 39; 41-46; 50, 51, 57) and drive means (33; 46, 49; 54, 58) to perform a composite rotational and translational movement of the heating means (25, 26; 35A, 35B) between said central operative position and a lateral non-operative position in which the heating means (25, 26; 35A, 35B) are disposed on at least one side of the structural frame (10), inside the working area (11A, 11B) of the apparatus, in which prevent any interference with the thermoforming mould member (13) and any other moving part.

2. A single-station thermoforming apparatus as claimed in claim 1, in which the heating means (25, 26; 35A, 35B) comprise at least one heating panel, and in which the working area (11A, 11B) extends along a vertical working axis, **characterised in that** the heating panel (25, 26; 35A, 35B), in the non-operative position, is disposed on a plane substantially parallel to said vertical axis of the working area (11A, 11B).

3. A single-station thermoforming apparatus as claimed in claim 1, in which said heating means (25, 26; 35A, 35B) comprise at least one heating panel, and in which the working area (11A, 11B) extends vertically along a working axis of the apparatus, **characterised in that** the heating panel (25, 26; 35A, 35B), in the non-operative position, is disposed in a slanted condition in respect to said vertical axis of the apparatus.

4. A single-station thermoforming apparatus as claimed in any one of the preceding claims, **characterised in that** the heating means, on at least one side of the supporting frame (16) for the plastic sheet (17), comprise a first and a second heating panels (35A, 35B), and independent control means for moving each heating panel (35A, 35B) between a respective operative position and non-operative position on one side and inside the working area (11A, 11B) of the apparatus.

5. A single-station thermoforming apparatus as claimed in claim 1, **characterised in that** said heating means comprise at least one heating panel (25, 26; 35A, 35B);
**in that** said control means on each of opposite sides of the frame (16), comprises a first slide guide (28; 38) for the panel (25, 26, 35A, 35B), which extends parallel to said window frame (16), and a second guide (30; 39) for the heating panel (25, 26), said second guide extending in a substantially transversal direction, in respect to the first guide (28; 38) and
having at least a guide portion slanted towards the inside of the working area (11A, 11B); and control means (38) to move the heating panel (25, 26; 35A, 35B) along said first and second slide guides (28, 30; 38, 39).

6. A single-station thermoforming apparatus as claimed in claim 5, **characterised in that** the control means comprise a geared motor (34) operatively connected to the heating panel (25, 26), and pivotally connected to a carriage (33) running along a pivotable support rod (31), hinged to the frame (10) of the apparatus.

7. A single-station thermoforming apparatus as claimed in claim 1, **characterised in that** the heating means comprises a heating panel (26) supported by an articulated quadrilateral system comprising articulated rods (41, 44, 46) and the same heating panel (26), pivotally supported by a pivot pin (43) of the same quadrilateral system (41, 44, 46, 26), and control means (49) to tiltably rotate the quadrilateral system (41, 44, 46, 26) on said pivot pin (43).

8. A single-station thermoforming apparatus as claimed in claim 7, **characterised in that** one rod member (46) of the articulated quadrilateral system (41, 44, 46, 26) is longitudinally extensible.

9. A single-station thermoforming apparatus as claimed in claim 1, **characterised in that** the heating means comprises at least one heating panel (26) articulated to a quadrilateral system having crossed diagonal rods (50, 51) hinged to the heating panel (26) and to a pivotable rod (57); first control means (55) operatively connected to the pivot pin (54) of said pivotable rod (57) to move the heating panel (26) by a roto-translational movement of the articulated system into an intermediate condition between the operative and the non-operative position of the heating panel (26) and second control means (58) to rotate said heating panel (26) and the articulated system (26, 50, 51, 57) from said intermediate condition to said non-operative position maintaining an unchanged the configuration of the articulated system (26, 50, 51, 57) in respect to the heating panel (26).

10. A thermoforming apparatus of the single-station type, comprising:
a structural frame (10) defining a working area (11A, 11B) having an axis which extends vertically;
at least one mould member (13, 20) movably supported along said vertical axis of the working area (11A, 11B) of the machine;
a window frame (16) into the working area (11A, 11B) to support a plastic sheet (17) to be processed;
locking means (18) to maintain the plastic sheet (17) pressed against said window frame (16);
a heating means (25, 26; 35A, 35B) to heat the plastic sheet (17) to a pre-established softening temperature, said heating means comprising at least one heating panel (25, 26; 35A, 35B) movably supported between an operative position in which the heating panel (25, 26; 35A, 35B) is disposed parallel to and on lateral face of the plastic sheet (17), and a non-operative position on one side of the machine; and
control means (34, 49) to move the heating panel (25, 26; 35A, 35B) between said operative and non-operative positions;
**characterised in that** said control means for controlling the movement of the heating panel (25, 26; 35A, 35B) comprises guide means (28, 29, 38, 39) and drive means (34, 49), to move the heating panel (25, 26; 35A, 35B) inside the working area (11A, 11B) between the operative position and the non-operative position, by composite of rotational and translational movements, to make the heating panel (25, 26; 35A, 35B) move along an arched path (P) having its convexity facing towards the plastic sheet (17) .
